# EUROPEAN PATENT APPLICATION

(11) **EP 4 660 218 A1**
(43) Date of publication of application: **10.12.2025**
(21) Application number: 24749885.0
(22) Date of filing: 11.01.2024
(51) Int. Cl.: C08G 77/16, C08G 77/46, C08L 83/12, C09D 183/12

(54) **HYDROXYL GROUP-CONTAINING ORGANOPOLYSILOXANE, METHOD FOR PRODUCING SAME, CURABLE COMPOSITION CONTAINING SAID ORGANOPOLYSILOXANE, COATING AGENT, AND COATED ARTICLE**

(30) Priority: 30.01.2023 JP 2023011466
(71) Applicant: SHIN-ETSU CHEMICAL CO., LTD., Tokyo 100-0005 (JP)
(72) Inventor: OKUNO, Hirohito, Annaka-shi, Gunma 379-0224 (JP); ASO, Fumihiro, Annaka-shi, Gunma 379-0224 (JP)
(74) Representative: Mewburn Ellis LLP
(86) International application number: PCT/JP2024/000367
(87) International publication number: WO 2024/161929

(57) **Abstract**

Provided is a hydroxyl group-containing organopolysiloxane represented by formula (I).

(SiO_{4/2})ₐ (R¹SiO_{3/2})_{b} (R¹₂SiO_{2/2})_{c} (R¹₃SiO_{1/2})_{d} (R²O_{1/2})ₑ (R³O_{1/2})_{f} (I)

(In the formula, R¹ is a monovalent saturated hydrocarbon group or the like, R² is a methyl group or the like, R³ is a group represented by formula (II), a, b, c, and d are numbers satisfying 0 ≤ a < 1, 0 < b ≤ 1, 0 ≤ c ≤ 0.5, 0 ≤ d < 1, and a+b+c+d = 1, e is a number satisfying 0 ≤ e ≤ 1, and f is a number satisfying 0 < f < 4.) 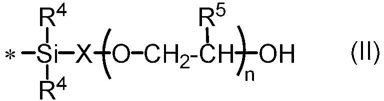 (In the formula, R⁴ is a monovalent saturated hydrocarbon group or the like, R⁵ is a hydrogen atom or a monovalent saturated hydrocarbon group, X is a divalent hydrocarbon group, n is a number from 0 to 400; and * indicates a bond with an oxygen atom.)

## Description

### TECHNICAL FIELD

The present invention relates to a hydroxyl group-containing organopolysiloxane, a method for preparing the same, a curable composition containing the organopolysiloxane, a coating agent and a coated article.

### BACKGROUND ART

Alkoxysilyl group-containing organopolysiloxanes are widely used in paints and coatings. In general, by mixing an organopolysiloxane having alkoxy groups on the ends with a curing catalyst and applying external energy such as heat energy, the terminal alkoxy groups mutually react, forming a strong siloxane network. As a result, the film obtained has excellent heat resistance and excellent weather resistance. Such films are thus applied to a broad range of objects ranging from outdoor structures to automotive parts and electronic components.

Although organopolysiloxane coatings have the above advantages, their rate of cure is slow and the resulting films have an inferior crack resistance and flex resistance.

In order to resolve these drawbacks, approaches that use as coatings a composition in which an organopolysiloxane and an organic resin such as an alkyd resin, polyester resin or acrylic resin are combined have hitherto been known (Patent Documents 1 to 4).

The hydroxyl group may be regarded as the most common functional group in organic resins. Hydroxyl groups are common functional groups in the above alkyd resins, polyester resins and acrylic resins. Many polyol resins having hydroxyl groups exist on the market.

Yet, branched organopolysiloxanes which contain hydroxyl groups and are capable of forming a strong siloxane network substantially do not currently exist on the market. The alkoxysilanes included within common organopolysiloxanes undergo hydrolysis by water, but similar reactions proceed with hydroxyl groups as well. Hence, hydroxyl group-containing organopolysiloxanes have a poor stability over time and so are difficult to sell.

Given this background, Non-Patent Documents 1 and 2 describe methods for synthesizing hydroxyl group-containing organopolysiloxanes by converting the organopolysiloxane into a cage-like structure and thus eliminating alkoxysilanes within the molecule. However, in order to render an organopolysiloxane into a cage-like form, the reaction must be carried out under sufficiently dilute conditions. Unfortunately, this results in a low yield, making industrialization difficult.

### PRIOR ART DOCUMENTS

### PATENT DOCUMENTS

Patent Document 1: JP-A H11-116683
Patent Document 2: JP-A H05-345877
Patent Document 3: JP 5384939
Patent Document 4: JP 6113456

### NON-PATENT DOCUMENTS

Non-Patent Document 1: H. Mori, et al., Langmuir, 2007, 23, 17, 9014-9023
Non-Patent Document 2: H. Takeuchi, et al., Reactive and Functional Polymers, 2017, 115, 43-52

### SUMMARY OF INVENTION

### TECHNICAL PROBLEM

The present invention was arrived at in light of the above circumstances. An object of the invention is to provide a hydroxyl group-containing organopolysiloxane which has an excellent shelf stability and excellent curability when used in a curable composition, and which gives a film of excellent chemical resistance and flex resistance.

### SOLUTION TO PROBLEM

The inventors have conducted intensive investigations aimed at achieving the above object. As a result, they have discovered that hydroxyl group-containing organopolysiloxanes of formula (1) below have a high shelf stability and, when used in curable compositions, have an excellent curability, giving films of excellent chemical resistance and flex resistance. The inventors have also discovered that these hydroxyl group-containing organopolysiloxanes can be obtained under given conditions. This discovery ultimately led to the present invention.

Accordingly, the invention provides:
1. A hydroxyl group-containing organopolysiloxane of formula (I) below 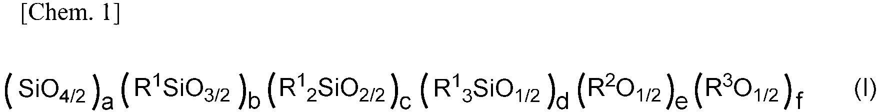 (wherein each R¹ is independently a hydrogen atom or a monovalent saturated hydrocarbon group of 1 to 12 carbon atoms, aralkyl group of 7 to 20 carbon atoms or aryl group of 6 to 18 carbon atoms which may be substituted with a halogen atom; R² is a hydrogen atom, methyl group, ethyl group, n-propyl group or isopropyl group; R³ is a group of formula (II) below 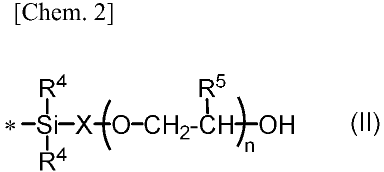 (wherein each R⁴ is independently a hydrogen atom or a monovalent saturated hydrocarbon group of 1 to 12 carbon atoms, aralkyl group of 7 to 20 carbon atoms or aryl group of 6 to 18 carbon atoms which may be substituted with a halogen atom; each R⁵ is independently a hydrogen atom or a monovalent saturated hydrocarbon group of 1 to 8 carbon atoms; X is a divalent hydrocarbon group of 2 to 8 carbon atoms; n is a number from 0 to 400; and * represents a bond with an oxygen atom); a, b, c and d are numbers which respectively satisfy the conditions 0 ≤ a < 1, 0 < b ≤ 1, 0 ≤ c ≤ 0.5, 0 ≤ d < 1 and a+b+c+d = 1; and e and f are numbers which respectively satisfy the conditions 0 ≤ e ≤ 1, 0 < f < 4 and 0 < e+f < 4);
2. The hydroxyl group-containing organopolysiloxane of 1 above, wherein at least one occurrence of R¹ in formula (I) is an aryl group of 6 to 18 carbon atoms;
3. The hydroxyl group-containing organopolysiloxane of 1 or 2 above, wherein each R¹ in formula (I) is independently a methyl group or a phenyl group;
4. The hydroxyl group-containing organopolysiloxane of any of 1 to 3 above, wherein R² in formula (I) is a methyl group;
5. The hydroxyl group-containing organopolysiloxane of any of 1 to 4 above, wherein b in formula (I) is a number satisfying the condition 0.5 ≤ b ≤ 1;
6. The hydroxyl group-containing organopolysiloxane of any of 1 to 5 above, wherein a and d in formula (I) are 0;
7. The hydroxyl group-containing organopolysiloxane of any of 1 to 6 above, wherein R⁴ in formula (II) is a methyl group, R⁵ is a hydrogen atom, X is an alkylene group having 3 carbon atoms, and n is 1;
8. The hydroxyl group-containing organopolysiloxane of any of 1 to 7 above which has a polystyrene-equivalent weight-average molecular weight (Mw) in gel permeation chromatography of from 1,000 to 500,000;
9. A method for preparing the hydroxyl group-containing organopolysiloxane of any of 1 to 8 above, which method includes the steps of:
   (α) obtaining a SiH group-containing organopolysiloxane by a hydrolytic condensation reaction between an organopolysiloxane of formula (I') below and a silane compound of formula (III) below or by an equilibration reaction between an organopolysiloxane of formula (I') below and a disiloxane compound of formula (IV) below using an acid catalyst
      [Chem. 3]

      (SiO_{4/2})ₐ (R¹SiO_{3/2})_{b} (R¹₂SiO_{2/2})_{c} (R¹₃SiO_{1/2})_{d} (R²O_{1/2})_{g} (I')

      (wherein R¹, R², a, b, c and d are as defined above, and g is a number which satisfies the condition 0 < g < 4) 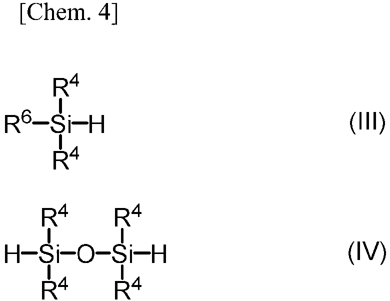
      (wherein R⁴ is as defined above; and R⁶ is a halogen atom, a hydroxyl group or an alkoxy group of 1 to 4 carbon atoms); and
   (β) effecting a hydrosilylation reaction between the SiH group-containing organopolysiloxane obtained in Step (α) and a compound of formula (V) below 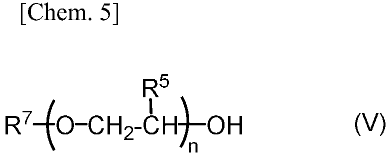 (wherein R⁵ and n are as defined above, and R⁷ is a monovalent aliphatic unsaturated hydrocarbon group of 2 to 8 carbon atoms);
10. A curable composition which includes the hydroxyl group-containing organopolysiloxane of any of 1 to 8 above and a curing agent capable of reacting with hydroxyl groups;
11. A coating agent which includes the curable composition of 10 above;
12. A cured film of the curable composition of 10 above; and
13. A coated article which includes a substrate and the cured film of 12 above formed, either directly or over one or more other layer, on at least one surface of the substrate.

### ADVANTAGEOUS EFFECTS OF INVENTION

The hydroxyl group-containing organopolysiloxane of the invention, given that it has excellent shelf stability and rapidly cures when it is mixed with a curing agent and applied, and given that the resulting cured film has excellent chemical resistance and flex resistance, is suitable for the manufacture of various coated articles.

### DESCRIPTION OF EMBODIMENTS

The invention is described more fully below.

### (1) Hydroxyl Group-Containing Organopolysiloxane

The hydroxyl group-containing organopolysiloxane of the invention is a compound represented by formula (I) below.
[Chem. 6]

(SiO_{4/2})ₐ (R¹SiO_{3/2})_{b} (R¹₂SiO_{2/2})_{c} (R¹₃SiO_{1/2})_{d} (R²O_{1/2})ₑ (R³O_{1/2})_{f} (I)

In formula (I), each R¹ is independently a hydrogen atom or a monovalent saturated hydrocarbon group of 1 to 12 carbon atoms, aralkyl group of 7 to 20 carbon atoms or aryl group of 6 to 18 carbon atoms which may be substituted with a halogen atom.

The monovalent saturated hydrocarbon group of 1 to 12 carbon atoms of R¹ may be linear, branched or cyclic. Specific examples include linear or branched alkyl groups such as methyl, ethyl, n-propyl, isopropyl, n-butyl, isobutyl, tert-butyl, neopentyl, n-hexyl, n-heptyl and n-octyl groups; and cycloalkyl groups such as cyclopentyl and cyclohexyl groups. Alkyl groups of 1 to 6 carbon atoms are preferred, alkyl groups of 1 to 3 carbon atoms are more preferred, and methyl and ethyl groups are even more preferred.

The aralkyl group of 7 to 20 carbon atoms is preferably one having from 7 to 10 carbon atoms. Specific examples include benzyl and phenylethyl groups.

The aryl group of 6 to 18 carbon atoms is preferably one having from 6 to 10 carbon atoms. Specific examples include unsubstituted aryl groups such as phenyl and naphthyl groups; and alkylaryl groups such as tolyl, xylyl, ethylphenyl, propylphenyl, butylphenyl, pentylphenyl, hexylphenyl, heptylphenyl, octylphenyl, nonylphenyl, decylphenyl, undecylphenyl and dodecylphenyl groups. A phenyl group is preferred.

Of these, methyl and phenyl groups are preferred as R¹.

Some or all of the hydrogen atoms on the above monovalent saturated hydrocarbon group, aralkyl group or aryl group may be substituted with halogen atoms (fluorine, chlorine, bromine or iodine atoms). Specific examples of these substituted groups include chloromethyl, chloropropyl, bromoethyl, trifluoropropyl, chlorophenyl and bromophenyl groups. Also, it is preferable for at least one occurrence of R¹ to be a halogen-substituted, or unsubstituted, aryl group of 6 to 18 carbon atoms.

R² is a hydrogen atom, methyl group, ethyl group, n-propyl group or isopropyl group; preferably a methyl group, ethyl group, n-propyl group or isopropyl group; more preferably a methyl group or ethyl group; and even more preferably a methyl group.

R³ is a group of formula (II) below.

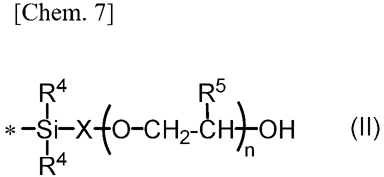

In formula (II), each R⁴ is independently a hydrogen atom or a monovalent saturated hydrocarbon group of 1 to 12 carbon atoms, aralkyl group of 7 to 20 carbon atoms or aryl group of 6 to 18 carbon atoms which may be substituted with a halogen atom. Specific examples of these monovalent saturated hydrocarbon groups, aralkyl groups and aryl groups include the same as those mentioned as examples of the respective groups in connection with R¹ above. Of these, R⁴ is preferably a methyl group, ethyl group or phenyl group; and is more preferably a methyl group.

Some or all of the hydrogen atoms on the monovalent saturated hydrocarbon group, aralkyl group or aryl group of R⁴ may be substituted with halogen atoms. Specific examples include the same groups as those mentioned in connection with R¹.

Each R⁵ is independently a hydrogen atom or a monovalent saturated hydrocarbon group of 1 to 8 carbon atoms. The monovalent saturated hydrocarbon group of R⁵ may be linear, branched or cyclic. Specific examples include the same as those among the groups mentioned in connection with R¹ which have 1 to 8 carbon atoms. Of these, R⁵ is preferably a hydrogen atom or an alkyl group of 1 to 3 carbon atoms; more preferably a hydrogen atom, methyl group or ethyl group; and even more preferably a hydrogen atom.

X is a divalent hydrocarbon group of 2 to 8 carbon atoms, and is preferably a linear or branched divalent aliphatic hydrocarbon group. Specific examples include alkylene groups such as ethylene, trimethylene, propylene, tetramethylene, hexamethylene and octamethylene groups. Of these, alkylene groups of 2 or 3 carbon atoms are preferred, alkylene groups of 3 carbon atoms are more preferred, and the trimethylene group is even more preferred.

The subscript 'n' is a number from 0 to 400. From the standpoint of solubility, a number from 0 to 100 is preferred, 0 or 1 is more preferred, and 1 is even more preferred.

The group of above formula (II) is preferably one in which R⁴ represents methyl groups, R⁵ is a hydrogen atom, X is an alkylene group of 3 carbon atoms, and n is 1.

In formula (I), the subscript 'a' is a number which satisfies the condition 0 ≤ a < 1. From the standpoint of the crack suppressing effect, a number that satisfies the condition 0 ≤ a ≤ 0.3 is preferred, and a = 0 is more preferred.

The subscript 'b' is a number which satisfies the condition 0 < b ≤ 1. From the standpoint of the mar resistance of the resulting cured product, a number that satisfies the condition 0.5 ≤ b ≤ 1 is preferred.

The subscript 'c' is a number which satisfies the condition 0 ≤ c ≤ 0.5. From the standpoint of the curability of the composition and the hardness of the resulting cured product, a number that satisfies the condition 0 ≤ c ≤ 0.4 is preferred; a number that satisfies the condition 0 ≤ c ≤ 0.3 is more preferred.

The subscript 'd' is a number which satisfies the condition 0 ≤ d < 1. From the standpoint of the curability of the composition and the hardness of the resulting cured product, a number that satisfies the condition 0 ≤ d ≤ 0.2 is preferred, and d = 0 is more preferred.

Also, a, b, c and d are numbers which satisfy the condition a+b+c+d = 1.

The subscript 'e' is a number which satisfies the condition 0 ≤ e ≤ 1. From the standpoint of suppressing condensation reactions by condensable functional groups, a number that satisfies the condition 0 ≤ e ≤ 0.8 is preferred.

The subscript 'f' is a number which satisfies the condition 0 < f < 4. From the standpoint of the crosslink density of the cured product, a number that satisfies the condition 0.2 < f ≤ 2 is preferred, and a number that satisfies the condition 0.4 < f ≤ 1.1 is more preferred.

Also, e and f are numbers which satisfy the condition 0 < e+f < 4, and are preferably numbers which satisfy the condition 0.2 < e+f ≤ 2.8.

The hydroxyl group-containing organopolysiloxane of the invention is preferably one for which, in above formula (I), R¹ is a methyl group or phenyl group, R² is a methyl group, a is 0, b is a number which satisfies the condition 0.5 ≤ b ≤ 1, c is a number which satisfies the condition 0 ≤ c ≤ 0.5, d is 0 and satisfies the condition a+b+c+d = 1, e is a number which satisfies the condition 0 ≤ e ≤ 0.8, f is a number which satisfies the condition 0.2 < f ≤ 2; and for which, in above formula (II), R⁴ is a methyl group, R³ is a hydrogen atom, X is an alkylene group of 3 carbon atoms, and n is 1.

The hydroxyl group-containing organopolysiloxane of the invention has a polystyrene-equivalent weight-average molecular weight (Mw) according to gel permeation chromatography (GPC) which is preferably from 1,000 to 500,000, and more preferably from 1,500 to 10,000. At a weight-average molecular weight of 1,000 or more, the shelf stability and flex resistance are better; at 500,000 or less, there is no risk of surface irregularities or uneven coating arising during application.

With regard to the GPC measurement conditions, the method used in, for example, the subsequent "Examples" section may be employed.

The hydroxyl group-containing organopolysiloxane of the invention has a kinematic viscosity at 25°C which is preferably from 5 to 2,000 mm²/s, and more preferably from 20 to 1,000 mm²/s. At 5 mm²/s or more, the shelf stability and flex resistance are even better; at 2,000 mm²/s or less, there is no risk of surface irregularities or uneven coating arising during application. The kinematic viscosity can be measured using, for example, a Cannon-Fenske viscometer.

The hydroxyl group-containing organopolysiloxane of the invention has an amount of alkoxy groups thereon which, from the standpoint of shelf stability and adhesion with the substrate, is preferably from 0.5 to 10 wt% with respect to the organopolysiloxane.

The hydroxyl group-containing organopolysiloxane of the invention may be one compound having a single composition or may be a mixture of a plurality of compounds of differing compositions.

### (2) Method for Preparing the Hydroxyl Group-Containing Organopolysiloxane

The method for preparing the hydroxyl group-containing organopolysiloxane of the invention is not particularly limited. For example, the inventive hydroxyl group-containing organopolysiloxane may be obtained by a method of preparation that includes Steps (α) and (β) below.
Step (α): Obtaining a SiH group-containing organopolysiloxane by a hydrolytic condensation reaction between an organopolysiloxane of formula (I') below and a silane compound of formula (III) below or by an equilibration reaction between an organopolysiloxane of formula (I') below and a disiloxane compound of formula (IV) below using an acid catalyst
   [Chem. 8]

   (SiO_{4/2})ₐ (R¹SiO_{3/2})_{b} (R¹₂SiO_{2/2})_{c} (R¹₃SiO_{1/2})_{d} (R²O_{1/2})_{g} (I')

   (wherein R¹, R², a, b, c and d are as defined above, and g is a number which satisfies the condition 0 < g < 4) 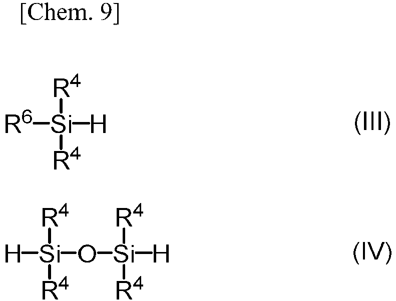 (wherein R⁴ is as defined above; and R⁶ is a halogen atom, a hydroxyl group or an alkoxy group of 1 to 4 carbon atoms).
Step (β): Effecting a hydrosilylation reaction between the SiH group-containing organopolysiloxane obtained in Step (α) and a compound of formula (V) below 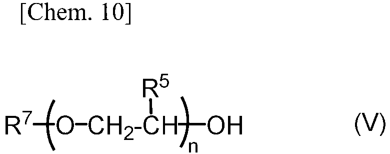 (wherein R⁵ and n are as defined above, and R⁷ is a monovalent aliphatic unsaturated hydrocarbon group of 2 to 8 carbon atoms).

### <Step (α)>

Step (α) is the step of obtaining a SiH group-containing organopolysiloxane by a hydrolytic condensation reaction between an organopolysiloxane of above formula (I') and a silane compound of above formula (III) or by an equilibration reaction between an organopolysiloxane of above formula (I') and a disiloxane compound of above formula (IV) using an acid catalyst.

In formula (I'), g is a number which satisfies the condition 0 < g < 4, and is preferably a number which satisfies the condition 0.2 < g ≤ 2.8.

The organopolysiloxane of formula (I') is preferably one in which R¹ is a methyl group or a phenyl group, R² is a methyl group, a is 0, b is a number which satisfies the condition 0.5 ≤ b ≤ 1, c is a number which satisfies the condition 0 ≤ c ≤ 0.5, d is a number which satisfies the condition a+b+c+d = 1, and g is a number which satisfies the condition 0.2 < g ≤ 2.8.

The organopolysiloxane of formula (I') can be prepared in accordance with a common organopolysiloxane preparation method. For example, it can be obtained by hydrolytically condensing a silane compound having hydrolyzable groups.

The hydrolyzable group-containing silane compound is not particularly limited, provided that it has from 1 to 4 hydrolyzable groups which are chloro groups or alkoxy groups on silicon atoms and that it is a silane compound having organic substituents which satisfy the above conditions.

Specific examples include tetrachlorosilane, tetramethoxysilane, tetraethoxysilane, tetraisopropoxysilane, tetrabutoxysilane, methyltrichlorosilane, methyltrimethoxysilane, methyltriethoxysilane, methyltriisopropoxysilane, methyltributoxysilane, dimethyldimethoxysilane, dimethyldiethoxysilane, dimethyldiisopropoxysilane, trimethylchlorosilane, trimethylmethoxysilane, trimethylethoxysilane, trimethylisopropoxysilane, ethyltrichlorosilane, ethyltrimethoxysilane, ethyltriethoxysilane, propyltrichlorosilane, propyltrimethoxysilane, propyltriethoxysilane, butyltrichlorosilane, butyltrimethoxysilane, butyltriethoxysilane, hexyltrichlorosilane, hexyltrimethoxysilane, hexyltriethoxysilane, phenyltrichlorosilane, phenyltrimethoxysilane, phenyltriethoxysilane, cyclohexyltrichlorosilane, cyclohexyltrimethoxysilane, cyclohexyltriethoxysilane, propylmethyldichlorosilane, propylmethyldimethoxysilane, propylmethyldiethoxysilane, hexylmethyldichlorosilane, hexylmethyldimethoxysilane, hexylmethyldiethoxysilane, phenylmethyldichlorosilane, phenylmethyldimethoxysilane, phenylmethyldiethoxysilane, diphenyldichlorosilane, diphenyldimethoxysilane, diphenyldiethoxysilane, dimethylphenylchlorosilane, dimethylphenylmethoxysilane, dimethylphenylethoxysilane and partial hydrolyzates of these. In terms of the workability, ease of distilling off by-products and availability of the starting materials, methoxysilane and ethoxysilane are preferred.

The above silane compound may be of one type used alone or two or more may be used in combination.

A hydrolysis catalyst may be used when carrying out hydrolysis. The hydrolysis catalyst used may be a known catalyst, and the aqueous solution thereof preferably is one that exhibits an acidity of pH 2 to 7 (acidic catalyst). Acidic hydrogen halides, sulfonic acids, carboxylic acids, acidic or weakly acidic inorganic salts, and solid acids such as ion-exchange resins are especially preferred.

Specific examples of acidic catalysts include hydrogen fluoride, hydrochloric acid, nitric acid, sulfuric acid, methanesulfonic acid, p-toluenesulfonic acid, formic acid, acetic acid, maleic acid, benzoic acid, lactic acid, phosphoric acid, and cationic exchange resins having sulfonic acid or carboxylic acid groups on the surface.

The amount of hydrolysis catalyst used is not particularly limited. However, to enable the reaction to proceed rapidly, and also taking into account the ease of removing the catalyst following the reaction, from 0.0002 to 0.5 mole per mole of hydrolyzable silane is preferred.

The weight ratio between the hydrolyzable group-containing silane compound and the water required for the hydrolytic condensation reaction is not particularly limited. However, to prevent catalyst deactivation and enable the reaction to fully proceed, and also taking into account the ease of removing water following the reaction, a ratio of from 0.1 to 10 moles of water per mole of hydrolyzable silane is preferred.

The reaction temperature during hydrolytic condensation is not particularly limited. However, to improve the rate of conversion and moreover to prevent the decomposition of organic functional groups, the temperature is preferably between -10°C and 150°C. The reaction time, although not particularly limited, is preferably from 0.5 to 6 hours.

An organic solvent may be used during hydrolytic condensation. Specific examples of organic solvents that may be used include methanol, ethanol, propanol, acetone, methyl ethyl ketone, methyl isobutyl ketone, tetrahydrofuran, toluene and xylene.

In above formula (III), examples of the halogen atom of R⁶ include fluorine, chlorine, bromine and iodine atoms. Examples of the alkoxy group of 1 to 4 carbon atoms include methoxy, ethoxy, n-propoxy and n-butoxy groups. Of these, R⁶ is preferably a chlorine atom, a hydroxyl group, a methoxy group or an ethoxy group.

Specific examples of silane compounds of above formula (III) include methoxysilane, dimethylmethoxysilane, ethoxysilane, dimethylethoxysilane, chlorosilane, dimethylchlorosilane and dimethylhydroxysilane.

A specific example of the disiloxane compound of above formula (IV) is 1,1,3,3-tetramethyldisiloxane.

In the step of obtaining an SiH group-containing organopolysiloxane by a hydrolysis condensation reaction between an organopolysiloxane of above formula (I') and a silane compound of above formula (III), the hydrolytic condensation reaction conditions are not particularly limited, although the reaction may be carried out under similar conditions as in the preparation of the organopolysiloxane of above formula (I').

In this case, although the ratio in which the organopolysiloxane of formula (I') and the silane compound of formula (III) are used is not particularly limited, it is preferable to use from 5 to 80 parts by weight, and more preferable to use from 10 to 70 parts by weight, of the silane compound of formula (III) per 100 parts by weight of the organopolysiloxane of formula (I').

When using a hydrolysis catalyst, the amount of use is not particularly limited, although from 0.0002 to 0.5 mole of the catalyst per mole of the silane compound of formula (III) is preferred.

The weight ratio between the hydrolyzable groups included in the organopolysiloxane of formula (I') and the water required in the hydrolytic condensation reaction is not particularly limited. However, because the rate of conversion can be changed by the amount of water added, a weight ratio that corresponds to the desired rate of conversion is preferred. To lower the amount of highly active alkoxy groups at the ends of the organopolysiloxane and ensure shelf stability, the alkoxy group rate of conversion is preferably from 50 to 100%, and more preferably from 60 to 100%.

In the step of obtaining a SiH group-containing organopolysiloxane by an equilibration reaction (siloxane bond cleavage/recombination reaction) between the organopolysiloxane of above formula (I') and the disiloxane compound of above formula (IV) using an acid catalyst, although the equilibration reaction conditions are not particularly limited, the reaction may be carried out at between 20°C and 150°C for a period of from about 0.5 hour to about 6 hours, and is preferably carried out at between 20°C and 100°C for a period of from about 1 hour to about 4 hours.

At this time, a solvent may be added where necessary. Examples of the solvent include alcohol solvents such as methanol, ethanol and isopropyl alcohol; and aromatic aprotic solvents such as benzene, toluene and xylene.

The ratio between the amounts in which the organopolysiloxane of formula (I') and the disiloxane compound of formula (IV) are used is not particularly limited, although the amount of disiloxane compound of formula (IV) is preferably from 10 to 70 parts by weight, and more preferably from 20 to 60 parts by weight, per 100 parts by weight of the organopolysiloxane of formula (I').

The acidic catalyst for promoting the equilibration reaction is preferably a strong acid. The type is of no particular concern, although suitable use can be made of, for example, sulfuric acid, methanesulfonic acid or trifluoromethanesulfonic acid. In terms of the ease of the work-up, a cation exchange resin having these exchange groups is especially preferred.

The amount of acidic catalyst added is preferably from 100 to 10,000 ppm, and more preferably from 500 to 3,000 ppm, with respect to the total weight of the organopolysiloxane of formula (I') and the disiloxane compound of formula (IV).

During the equilibration reaction, water may be added to promote a hydrolytic condensation reaction between the organopolysiloxane of formula (I') and the disiloxane compound of formula (IV). Although the amount of water added is not particularly limited, because the rate of conversion can be changed by the amount of water added, a weight ratio that corresponds to the desired rate of conversion is preferred. To lower the amount of highly active alkoxy groups at the ends of the organopolysiloxane and ensure shelf stability, the alkoxy group rate of conversion is preferably from 50 to 100%, and more preferably from 60 to 100%.

### <Step (β)>

Step (β) is the step of obtaining a hydroxyl group-containing organopolysiloxane by effecting a hydrosilylation reaction between the SiH group-containing organopolysiloxane obtained in Step (α) and a compound of above formula (V).

In formula (V), the monovalent aliphatic unsaturated hydrocarbon group of 2 to 8 carbon atoms represented by R⁷ is preferably one having from 2 to 6 carbon atoms. Specific examples include alkenyl groups such as vinyl, allyl, 3-butenyl, 5-hexenyl and 7-octenyl groups. Vinyl and allyl groups are preferred; an allyl group is more preferred.

Taking into account the compatibility with the organopolysiloxane, the compound of above formula (V) is preferably vinyl alcohol, allyl alcohol or ethylene glycol monoallyl ether, and is more preferably ethylene glycol allyl ether.

The amount of the compound of formula (V) furnished to the hydrosilylation reaction is preferably one mole or more per mole of SiH groups in the SiH group-containing organopolysiloxane obtained in Step (α).

The hydrosilylation reaction is preferably carried out in the presence of a catalyst. Compounds containing a platinum group metal such as platinum, rhodium or palladium may be used as the hydrosilylation reaction catalyst. Of these, platinum-containing compounds are preferred. Examples include platinum black, chloroplatinic acid, alcohol-modified chloroplatinic acid, complexes of chloroplatinic acid with an olefin, vinyl siloxane, acetylene alcohol or the like, platinum carbonyl vinylmethyl complexes, platinum divinyltetramethyldisiloxane complexes, platinum cyclovinyl-methylsiloxane complexes and platinum-octyl aldehyde/octanol complexes.

The amount of addition should be a so-called catalytic amount that can promote the addition reaction, this typically being, based on the weight of the platinum group metal, from 0.1 to 500 ppm, preferably from 1 to 200 ppm, with respect to the weight of the compound of above formula (V).

The hydrosilylation reaction conditions, although not particularly limited, are preferably a reaction temperature of between 20°C and 120°C and a reaction time of from 1 to 8 hours, and more preferably a reaction temperature of between 20°C and 100°C and a reaction time of from 1 to 6 hours.

By thus introducing SiH groups onto the ends of the hydrolyzable group-containing organopolysiloxane of formula (I') and then carrying out a hydrosilylation reaction with the hydroxyl group-containing compound of formula (V), the hydroxyl group-containing organopolysiloxane of the invention can be obtained.

### (3) Curable Composition

The hydroxyl group-containing organopolysiloxane of the invention, by adding thereto a curing agent having a substituent that is capable of reacting with a hydroxyl group, can be utilized as a curable composition.

The curing agent is not particularly limited, provided that it is one which is commonly used in polyol-based coatings. Examples include metal driers, polyisocyanates, amino resins such as melamine resins, benzoguanamine resins, urea resins and thiourea resins, epoxy resins, and polycarboxylic anhydrides. A polyisocyanate is preferred.

Polyisocyanates that can be used include known polyisocyanates such as aromatic, aliphatic, aromatic-aliphatic and alicyclic polyisocyanates. From the standpoint of prolonged outdoor use, aliphatic polyisocyanates obtained from aliphatic diisocyanates as the chief starting material are suitable.

Examples of the aliphatic diisocyanate include tetramethylene diisocyanate, 1,5-pentamethylene diisocyanate, 1,6-hexamethylene diisocyanate (abbreviated below as "HDI"), 2,2,4-(or 2,4,4-)trimethyl-1,6-hexamethylene diisocyanate, lysine isocyanate, isophorone diisocyanate, hydrogenated xylene diisocyanate, hydrogenated diphenylmethane diisocyanate, 1,4-diisocyanate cyclohexane, 1,3-bis(diisocyanatomethyl)cyclohexane and 4,4'-dicyclohexylmethane diisocyanate.

Of these, from the standpoint of the crack resistance and cost of the resulting film, HDI is especially preferred.

Examples of aliphatic polyisocyanates that can be obtained from aliphatic diisocyanates include allophanate-type polyisocyanates, biuret-type polyisocyanates, adduct-type polyisocyanates and isocyanurate-type polyisocyanates. All of these may be suitably used.

It is also possible to use as the above polyisocyanate a so-called blocked polyisocyanate that has been blocked with various blocking agents.

Blocking agents that may be used include alcohols such as methanol, ethanol and lactic acid esters; phenolic hydroxyl group-containing compounds such as phenol and salicylic acid esters; amides such as ε-caprolactam and 2-pyrrolidone; oximes such as acetone oxime and methyl ethyl ketoxime; and active methylene compounds such as methyl acetoacetate, ethyl acetoacetate and acetyl acetone.

The amount of curing agent included is not particularly limited, although the amount is preferably such that the ratio of the number of isocyanate groups in the curing agent to the number of hydroxyl groups in the hydroxyl group-containing polysiloxane (NCO/OH) is from 0.5 to 1.1, and more preferably such that the ratio is from 0.7 to 1.0.

A single curing agent may be used alone, or two or more curing agents may be used in combination.

The curable composition of the invention may additionally include a curing catalyst. The curing catalyst is not particularly limited, provided that it is one which is commonly used in organosiloxane coatings, although an organometallic compound is preferred. Exemplary organometallic compound include metal alkoxide compounds, metal chelate compounds and metal ester compounds of metals such as Ti, Al, Zr or Sn.

Specific examples of metal alkoxide compounds include aluminum alkoxides such as aluminum trimethoxide, aluminum triethoxide, aluminum tri-n-propoxide, aluminum triisopropoxide, aluminum tri-n-butoxide, aluminum triisobutoxide, aluminum tri-s-butoxide and aluminum tri-t-butoxide; titanium alkoxides such as tetramethyl titanate, tetraethyl titanate, tetra-n-propyl titanate, tetraisopropyl titanate, tetra-n-butyl titanate, tetraisobutyl titanate, tetra-t-butyl titanate, tetra-n-hexyl titanate, tetraisooctyl titanate and tetra-n-lauryl titanate; zirconium alkoxides such as tetraethyl zirconate, tetra-n-propyl zirconate, tetraisopropyl zirconate, tetra-n-butyl zirconate, tetra-s-butyl zirconate, tetra-t-butyl zirconate, tetra-n-pentyl zirconate, tetra-t-pentyl zirconate, tetra-t-hexyl zirconate, tetra-n-heptyl zirconate, tetra-n-octyl zirconate and tetra-n-stearyl zirconate; and dibutyltin dibutoxide.

Specific examples of metal chelate compounds include aluminum chelate compounds such as tris(ethyl acetoacetate)aluminum, tris(n-propyl acetoacetate)aluminum, tris(isopropyl acetoacetate)aluminum, tris(n-butyl acetoacetate)aluminum, isopropoxybis(ethyl acetoacetate)aluminum, tris(acetylacetonate)aluminum, tris(propionylacetonate)aluminum, diisopropoxypropionylacetonatealuminum, acetylacetonate bis(propionylacetonate)aluminum, monoethylacetoacetate bis(acetylacetonate)aluminum, acetylacetonatealuminum di-s-butyrate, methylacetoacetatealuminum di-s-butyrate, di(methylacetoacetate)aluminum mono-tert-butyrate, diisopropoxyethylacetoacetatealuminum and monoacetylacetonate bis(ethylacetoacetate)aluminum; titanium chelate compounds such as diisopropoxy bis(ethylacetoacetate)titanate, diisopropoxy bis(acetylacetonate)titanate and di-n-butoxy bis(acetylacetonate)titanate; zirconium chelate compounds such as tetrakis(acetylacetonate)zirconium, tetrakis(n-propylacetoacetate)zirconium and tetrakis(ethylacetoacetate)zirconium; and tin chelate compounds, including tin ester compounds such as dibutyltin diacetate, dibutyltin di(2-ethylhexylate), dibenzyltin di(2-ethylhexylate), dibutyltin dilaurate, dibutyltin diisooctyl maleate and dibutyltin bis(acetylacetonate).

When a curing catalyst is included, the content thereof should be an amount that is sufficient to cure the composition, and is preferably from 0.01 to 20 parts by weight, more preferably from 0.1 to 10 parts by weight, per 100 parts by weight of nonvolatile matter in the hydroxyl group-containing organopolysiloxane.

A single curing catalyst may be used alone or two or more curing catalysts may be used in combination.

The curable composition of the invention may include hydroxyl group-containing compounds other than the hydroxyl group-containing organopolysiloxane. Specific examples of such curable compositions include, but are not limited to, polyester or alkyd-type curable compositions containing the hydroxyl group-containing organopolysiloxane of the invention, a polyol and a polybasic acid; polyurethane-type curable compositions containing the hydroxyl group-containing organopolysiloxane of the invention, a polyol and a polyisocyanate; epoxy-type curable compositions containing the hydroxyl group-containing organopolysiloxane of the invention, a polyol and an epoxy resin; and curable compositions containing the hydroxyl group-containing organopolysiloxane of the invention, a polyol and an etherified melamine resin and/or a benzoguanamine resin.

A reaction mixture of the hydroxyl group-containing organopolysiloxane of the invention with a compound that has both a substituent capable of reacting with a hydroxyl group and a radical polymerizable group can be utilized as a photocurable composition or a heat-curable composition by adding thereto a photoradical initiator or a thermoradical initiator. Such curable compositions are exemplified by photocurable compositions which include a reaction mixture of the inventive hydroxyl group-containing organopolysiloxane with an isocyanate group-containing (poly)acrylate and include also a photoradical initiator.

### (4) Cured Film of Curable Composition, and Coated Article

The curable composition of the invention can be suitably used as a coating agent, and is particularly suitable for use in outside wall paint applications, although applicable uses therefor are not particularly limited. When used as a coating agent, by applying the curable composition of the invention, either directly or over one or more other layer, to at least one surface of a substrate and curing the applied composition so as to form a film, there can be obtained a coated article having a cured film of the curable composition formed, either directly or over one or more other layer, on at least one surface of a substrate.

The substrate is exemplified by, without particular limitation, glass, silicone wafers, metals, plastic moldings, ceramics and composites of these.

These substrates may be substrates whose surfaces have been chemical conversion treated, corona discharge treated, plasma treated, or treated with an acid or alkali solution; decorative plywood in which the substrate proper and the surface layer have been coated with different types of coatings may also be used. Examples of other layers include ones obtained by polyester resin application, polyurethane resin application, aminoalkyd resin application, lacquer application, spray painting or water-based wax application.

The method for applying the curable composition of the invention onto a substrate may be suitably selected from known techniques. Use can be made of various coating methods such as, for example, roll coating, bar coating, wire bar coating, spray coating, flow coating, spin coating, curtain coating, knife coating, dip coating and brush coating. No particular limitation is imposed on the amount that is applied, although in general the amount is preferably such that the thickness of the film after drying is from 0.1 to 1,000 µm, and more preferably such that the film thickness after drying is from 1 to 100 µm .

The method for curing the composition is exemplified by room temperature curing and heat curing. The heating temperature, although not particularly limited, is preferably between 50°C and 200°C, and more preferably between 80°C and 150°C.

### EXAMPLES

Examples of the invention and Comparative Examples are given below by way of illustration, although the invention is not limited by these Examples. The dynamic viscosity is a value measured at 25°C using a Cannon-Fenske viscometer. The average composition of an organopolysiloxane is the value computed from integrated values in ¹H-NMR and ²⁹Si-NMR spectra obtained using an NMR spectrometer from JEOL, Ltd. The weight-average molecular weight (Mw) is a polystyrene-equivalent value determined by gel permeation chromatographic (GPC) measurement under the following conditions.

| [GPC Conditions] | |
|---|---|
| Apparatus: | HLC-8220 GPC (Tosoh Corporation) |
| Columns: | TSKgel GMHXL-L, TSKgel G4000HXL, TSKgel G2000HXL (two) |
| Developing solvent: | tetrahydrofuran (THF) |
| Flow rate: | 1 mL/min |
| Detector: | RI |
| Column thermostatic chamber temperature: | 40°C |
| Reference material: | polystyrene |

### [1] Synthesis of Hydroxyl Group-Containing Organopolysiloxanes

The Organopolysiloxanes of Examples 1-1 to 1-5 and Comparative Examples 1-1 to 1-3 were prepared using Organopolysiloxanes A to D below as the starting materials.

### <Starting Organopolysiloxanes>

| | |
|---|---|
| Organopolysiloxane A: | An organopolysiloxane of above formula (I') in which a = 0, b = 0.6, c = 0.4, d = 0, g = 1.1, R¹ represents methyl and phenyl groups, and R² represents a methyl group (weight-average molecular weight, 1,500; kinematic viscosity, 100 mm²/s) |
| Organopolysiloxane B: | An organopolysiloxane of above formula (I') in which a = 0, b = 0.9, c = 0.1, d = 0, g = 1.3, R¹ represents methyl and phenyl groups, and R² represents a methyl group (weight-average molecular weight, 1,800; kinematic viscosity, 70 mm²/s) |
| Organopolysiloxane C: | An organopolysiloxane of above formula (I') in which a = 0, b = 1, c = 0, d = 0, g = 1.3, R¹ represents methyl and phenyl groups, and R² represents a methyl group (weight-average molecular weight, 1,000; kinematic viscosity, 30 mm²/s) |
| Organopolysiloxane D: | An organopolysiloxane of above formula (I') in which a = 0, b = 0, c = 1, d = 0, g = 0.2, R¹ represents methyl groups, and R² represents a methyl group (weight-average molecular weight, 350; kinematic viscosity, 2.5 mm²/s) |

### [Example 1-1]

A 500 mL separable flask equipped with a stirrer, a reflux condenser, a dropping funnel and a thermometer was charged with 100 parts by weight of Organopolysiloxane A, 55 parts by weight of tetramethyldisiloxane, 35 parts by weight of methanol and 2 parts by weight of a strongly acidic cationic exchange resin (Lewatit K 2629, from Lanxess AG), and 11 parts by weight of water was added dropwise under stirring. After 3 hours of stirring at 25°C, filtration of the resulting reaction mixture was carried out. Next, the fraction obtained by vacuum distillation (90°C, 1.3 kPa) was discarded. The rate of conversion of Si-OCH₃ groups computed from the integrated value for the detection spectra in ¹H-NMR and ²⁹Si-NMR was 80%.

To this was added 0.1 part by weight of a 1,3-divinyltetramethyldisiloxane complex of Pt(0) and 64 parts by weight of ethylene glycol monoallyl ether and 4 hours of heating at 80°C was carried out, following which unreacted ethylene glycol monoallyl ether was removed by vacuum distillation (90°C, 1.3 kPa), giving a hydroxyl group-containing organopolysiloxane (yield, 150 parts by weight).

### [Examples 1-2 to 1-5, Comparative Examples 1-1 to 1-3]

Aside from changing the starting organopolysiloxane to that shown in Table 1 and changing the rate of conversion of Si-OCH₃ groups by means of the amount of water added dropwise, the hydroxyl group-containing organopolysiloxanes of Examples 1-2 to 1-5 and Comparative Examples 1-1 to 1-3 were prepared in the same way as in Example 1-1.

The values of e and f in formula (I) and the weight-average molecular weight (Mw) and stability of the resulting organopolysiloxanes are given in Table 1. The stability was rated as "OK" in cases where a pronounced increase in viscosity or gelation were not observed when the organopolysiloxane was heated for 10 days in a 50°C drying oven, and was rated as "NG" in cases where an increase in viscosity or gelation was observed.

**[Table 1]**

| | Starting organopolysiloxane/rate of conversion of Si-OCH₃ groups (%) | e | f | Mw | Stability |
|---|---|---|---|---|---|
| Example 1-1 | Organopolysiloxane A/80 | 0.4 | 0.7 | 2,500 | OK |
| Example 1-2 | Organopolysiloxane B/80 | 0.3 | 1 | 3,300 | OK |
| Example 1-3 | Organopolysiloxane C/80 | 0.6 | 0.7 | 4,000 | OK |
| Example 1-4 | Organopolysiloxane A/60 | 0.8 | 0.4 | 2,500 | OK |
| Example 1-5 | Organopolysiloxane A/90 | 0.2 | 1.1 | 3,200 | OK |
| Comparative Example 1-1 | Organopolysiloxane A/40 | 1.1 | 0.2 | 2,000 | NG |
| Comparative Example 1-2 | Organopolysiloxane C/40 | 1.1 | 0.3 | 2,400 | NG |
| Comparative Example 1-3 | Organopolysiloxane D/100 | 0 | 0.2 | 800 | OK |

### [2] Preparation of Curable Composition

### [Examples 2-1 to 2-5, Comparative Examples 2-1 to 2-4]

Curable compositions were prepared by mixing together, at 25°C and in the proportions (weight ratios) shown in Table 2, the organopolysiloxanes obtained in Examples 1-1 to 1-5 and Comparative Example 1-3, above Organopolysiloxane A, above Organopolysiloxane B, and the following curing agents and curing catalysts.

### <Curing Agents>

| | |
|---|---|
| Curing Agent A: | Duranate TPA100 (a polyisocyanate-type curing agent; isocyanate content, 23.2 wt%; from Asahi Kasei Corporation) |
| Curing Agent B: | Burnock DN-901S (a polyisocyanate-type curing agent; isocyanate content, 23.1 wt%; from DIC Corporation) |

### <Curing Catalysts>

| | |
|---|---|
| Curing Catalyst A: | Neostann U-810 (dioctyltin, from Nitto Kasei Co., Ltd.) |
| Curing Catalyst B: | Orgatix TC-750 (a titanium catalyst, from Matsumoto Fine Chemical Co., Ltd.) |

### [3] Production of Cured Film

The resulting curable compositions were applied with a bar coater to a thickness of 10 µm onto a polished steel sheet wiped of surface oil and then left at rest for 7 days under 23°C, 50% RH conditions, giving a cured film. The solvent resistance and flex resistance of the resulting cured film were evaluated. The results are shown in Table 2.

### (1) Solvent Resistance

A Bemcot M-311 wipe (Asahi Kasei Corporation; surface area, 4 cm²) was wetted with acetone and then rubbed back-and-forth 30 times over the surface under a load of 500 g, following which the appearance of the applied film was visually assessed. Cured films in which no change in the appearance of the film was observed following the rubbing test as compared with before the test were rated as "∘"; those in which peeling or clouding of the applied film was observed were rated as "×".

### (2) Flex Resistance

The flex resistance was evaluated by carrying out a test in general accordance with the cylindrical mandrel method (JIS K5600-5-1: 1999). In flex resistance tests carried out using a cylindrical mandrel having a diameter of 6 mm, cured films in which cracks or peeling in the appearance did not arise were rated as "∘"; those in which cracks or peeling arose were rated as "×".

**[Table 2]**

| | Organopolysiloxane | Curing agent | Curing catalyst | Solvent resistance | Flex resistance |
|---|---|---|---|---|---|
| Example 2-1 | Example 1-1 100 pbw | Curing Agent A 45 pbw | Catalyst A 0.1 pbw | ○ | ○ |
| Example 2-2 | Example 1-1 100 pbw | Curing Agent B 25 pbw | Catalyst A 0.1 pbw | ○ | ○ |
| Example 2-3 | Example 1-2 100 pbw | Curing Agent A 45 pbw | Catalyst A 0.1 pbw | ○ | ○ |
| Example 2-4 | Example 1-3 100 pbw | Curing Agent A 45 pbw | Catalyst A 0.1 pbw | ○ | ○ |
| Example 2-5 | Example 1-4 100 pbw | Curing Agent A 45 pbw | Catalyst A 0.1 pbw | ○ | ○ |
| Example 2-6 | Example 1-5 100 pbw | Curing Agent A 45 pbw | Catalyst A 0.1 pbw | ○ | ○ |
| Comparative Example 2-1 | Comp. Ex. 1-3 100 pbw | Curing Agent A 45 pbw | Catalyst A 0.1 pbw | × | ○ |
| Comparative Example 2-2 | Organopolysiloxane A 100 pbw | Curing Agent A 45 pbw | Catalyst A 0.1 pbw | × | ○ |
| Comparative Example 2-3 | Organopolysiloxane A 100 pbw | - | Catalyst B 2 pbw | ○ | × |
| Comparative Example 2-4 | Organopolysiloxane B 100 pbw | - | Catalyst B 2 pbw | ○ | × |

As shown in Table 2, cured films of the curable compositions in Examples 2-1 to 2-5 had an excellent solvent resistance and exhibited a high flex resistance.

By contrast, it is apparent that the cured films obtained from the compositions in Comparative Examples 2-1 and 2-2 in which organopolysiloxanes lacking sufficient hydroxyl groups were used had poor solvent resistances and did not sufficiently cure even when a polyisocyanate curing agent was used. Also, in Comparative Examples 2-3 and 2-4 in which the films were cured by increasing the amount of condensation curing catalyst relative to an organopolysiloxane lacking sufficient hydroxyl groups, the cured films had a sufficient solvent resistance but the flex resistance was poor.

## Claims

1. A hydroxyl group-containing organopolysiloxane of formula (I) below
[Chem. 1]
(SiO_{4/2})ₐ (R¹SiO_{3/2})_{b} (R¹₂SiO_{2/2})_{c} (R¹₃SiO_{1/2})_{d} (R²O_{1/2})ₑ (R³O_{1/2})_{f} (I)
(wherein each R¹ is independently a hydrogen atom or a monovalent saturated hydrocarbon group of 1 to 12 carbon atoms, aralkyl group of 7 to 20 carbon atoms or aryl group of 6 to 18 carbon atoms which may be substituted with a halogen atom; R² is a hydrogen atom, methyl group, ethyl group, n-propyl group or isopropyl group; R³ is a group of formula (II) below 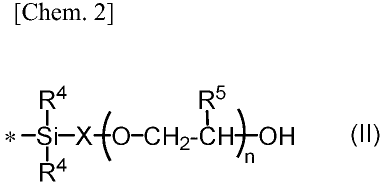
(wherein each R⁴ is independently a hydrogen atom or a monovalent saturated hydrocarbon group of 1 to 12 carbon atoms, aralkyl group of 7 to 20 carbon atoms or aryl group of 6 to 18 carbon atoms which may be substituted with a halogen atom; each R⁵ is independently a hydrogen atom or a monovalent saturated hydrocarbon group of 1 to 8 carbon atoms; X is a divalent hydrocarbon group of 2 to 8 carbon atoms; n is a number from 0 to 400; and * represents a bond with an oxygen atom); a, b, c and d are numbers which respectively satisfy the conditions 0 ≤ a < 1, 0 < b ≤ 1, 0 ≤ c ≤ 0.5, 0 ≤ d < 1 and a+b+c+d = 1; and e and f are numbers which respectively satisfy the conditions 0 ≤ e ≤ 1, 0 < f < 4 and 0 < e+f < 4).

2. The hydroxyl group-containing organopolysiloxane of claim 1, wherein at least one occurrence of R¹ in formula (I) is an aryl group of 6 to 18 carbon atoms.

3. The hydroxyl group-containing organopolysiloxane of claim 1 or 2, wherein each R¹ in formula (I) is independently a methyl group or a phenyl group.

4. The hydroxyl group-containing organopolysiloxane of any one of claims 1 to 3, wherein R² in formula (I) is a methyl group.

5. The hydroxyl group-containing organopolysiloxane of any one of claims 1 to 4, wherein b in formula (I) is a number satisfying the condition 0.5 ≤ b ≤ 1.

6. The hydroxyl group-containing organopolysiloxane of any one of claims 1 to 5, wherein a and d in formula (I) are 0.

7. The hydroxyl group-containing organopolysiloxane of any one of claims 1 to 6, wherein R⁴ in formula (II) is a methyl group, R⁵ is a hydrogen atom, X is an alkylene group having 3 carbon atoms, and n is 1.

8. The hydroxyl group-containing organopolysiloxane of any one of claims 1 to 7 which has a polystyrene-equivalent weight-average molecular weight (Mw) in gel permeation chromatography of from 1,000 to 500,000.

9. A method for preparing the hydroxyl group-containing organopolysiloxane of any one of claims 1 to 8, which method comprises the steps of:
(α) obtaining a SiH group-containing organopolysiloxane by a hydrolytic condensation reaction between an organopolysiloxane of formula (I') below and a silane compound of formula (III) below or by an equilibration reaction between an organopolysiloxane of formula (I') below and a disiloxane compound of formula (IV) below using an acid catalyst
[Chem. 3]
(SiO_{4/2})ₐ (R¹SiO_{3/2})_{b} (R¹₂SiO_{2/2})_{c} (R¹₃SiO_{1/2})_{d} (R²O_{1/2})_{g} (I')
(wherein R¹, R², a, b, c and d are as defined above, and g is a number which satisfies the condition 0 < g < 4) 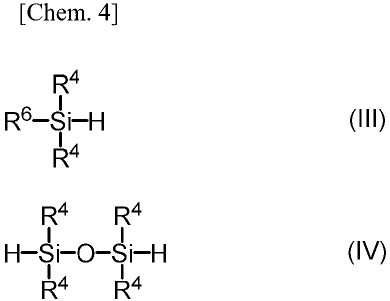
(wherein R⁴ is as defined above; and R⁶ is a halogen atom, a hydroxyl group or an alkoxy group of 1 to 4 carbon atoms); and
(β) effecting a hydrosilylation reaction between the SiH group-containing organopolysiloxane obtained in Step (α) and a compound of formula (V) below 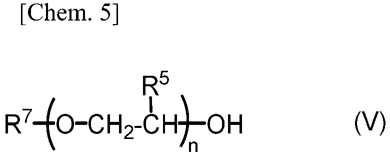 (wherein R⁵ and n are as defined above, and R⁷ is a monovalent aliphatic unsaturated hydrocarbon group of 2 to 8 carbon atoms).

10. A curable composition comprising the hydroxyl group-containing organopolysiloxane of any one of claims 1 to 8 and a curing agent capable of reacting with hydroxyl groups.

11. A coating agent comprising the curable composition of claim 10.

12. A cured film of the curable composition of claim 10.

13. A coated article comprising a substrate and the cured film of claim 12 formed, either directly or over one or more other layer, on at least one surface of the substrate.
